# EUROPEAN PATENT APPLICATION

(11) **EP 1 310 280 A2**
(43) Date of publication of application: **14.05.2003**
(21) Application number: 02024886.0
(22) Date of filing: 08.11.2002
(51) Int. Cl.: A63F 13/08

(54) **Driving system for scale models of road vehicles**

(30) Priority: 12.11.2001 IT MO20010032
(71) Applicant: Caliri, Anna, 41012 Carpi (IT)
(72) Inventor: Caliri, Anna, 41012 Carpi (IT)
(74) Representative: Cerbaro, Elena, Dr.

(57) **Abstract**

Driving system (1) for toy cars, said driving system (1) being provided with a camera (8) installed on the model (2) of vehicle to take an image corresponding to the driver's view and to radio transmit the image to a fixed driving post (6) which is shaped like the driving post of a real car and is provided with a large display (9)apt to reproduce the images transmitted by the cameras (8) and placed in front of the user sitting in the driving post (6).

## Description

The present invention concerns a driving system for scale models of road vehicles.

A particularly advantageous application of the present invention concerns the field of remote-controlled toy cars, which will be hereinafter referred to in the following description in a non-limiting way.

Commonly used toy cars are provided with an electric or an internal-combustion engine and with a remote-controlled system using a remote control. By means of said remote control, a user can drive his toy car always keeping eye contact with the toy. Usually, the main controls in the remote control are two levers straightforwardly moving along relative guides in order to change the steering angle of the toy car wheels and the advancement speed of the toy car.

Obviously, when a user drives his own toy car, said user is simultaneously both driver and spectator, and he has to drive the toy car from a spectator's point of view and not from a driver's point of view. This makes driving difficult, especially when the toy car moves towards the user, and above all it makes driving the toy car quite different from driving a real car, thus discouraging many motor-racing fans from getting fond of modelling. As a confirmation of the aforesaid, the levers in the remote control of a remote-controlled toy car are totally different from the controls of a real car.

In order to overcome the above-mentioned disadvantages, it has been proposed (as e.g. described in the patent applications JP 10043439, WO 0156676 and DE 19902852) to place on the toy car a camera whose images correspond to the view of a driver sitting behind the steering wheel of the car. Then the camera transmits the image to a display integrated in the remote control. In this way the user can have at the same time both the spectator's and the driver's view. However, tests carried out on toy cars provided with camera, as the aforesaid, showed that even this driving system is not satisfactory for motor-racing fans.

The aim of the present invention is to realize a driving system for scale models of road vehicles free from the aforesaid drawbacks, user-friendly and cheap.

According to the present invention, there is provided a driving system for scale models of road vehicle as recited by claim 1.

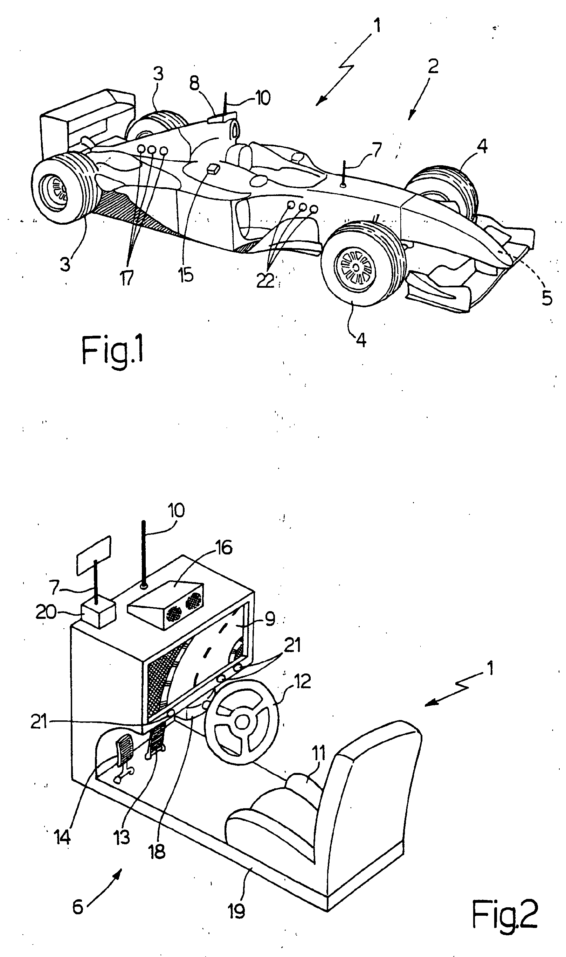

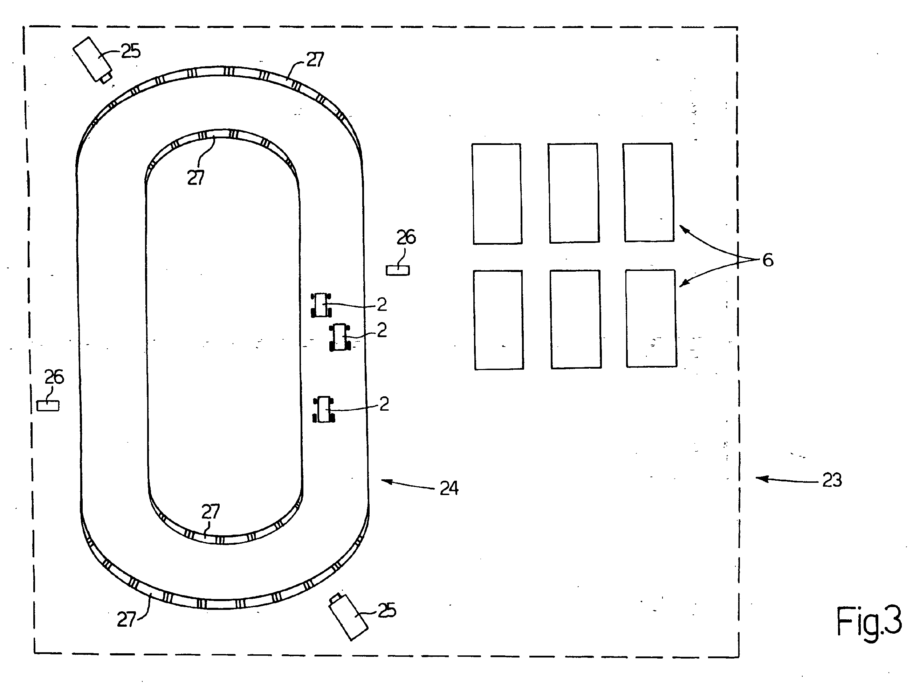

The present invention will be hereinafter described with reference to the enclosed drawings, showing some non-limitative embodiments:
■ figure 1 schematically shows a perspective view of a toy racing car provided with a driving system according to the present invention;
■ figure 2 schematically shows a perspective view of the driving post of the driving system of figure 1; and
■ figure 3 shows a schematic view of a racing track for the circulation of toy cars according to figure 1.

In figures 1 and 2, number 1 generally refers to a driving system for a toy racing car 2 (preferably on a 1:5 scale) provided with an engine connected by means of a usually centrifugal clutch and a reduction ratio on rear wheels 3 (two-wheel drive); an actuator connected with a steering device of front wheels 4 and a braking device controlling both rear wheels 3 and front wheels 4. According to a possible embodiment, the engine of toy car 2 could be connected to a sequential change gear controlled by a respective actuator. Moreover, the engine could be connected to front wheels 4 (two-wheel drive) or both to rear wheels 3 and to front wheels 4 (four-wheel drive).

The driving system 1 includes a driving device 5 which is integral to toy car 2 in order to send driving orders to toy car 2 acting on the engine, on the actuator of the steering device and on the actuator of the braking device. Driving system 1 further comprises a fixed driving post 6, which receives driving orders from the user and represents a user interface, a radio transmission device 7 to transmit the driving orders from the driving post 6 to the driving device 5, a camera 8 placed on toy car 2 to take an image corresponding to the driver's view, a display 9 coupled to the driving post 6 to show the images received from camera 8, and a radio transmission device 10 to transmit the images from camera 8 to display 9.

Usually, toy car 2 is provided with an electric battery (already known and therefore not shown) ensuring the power supply to the various parts of toy car 2. In order to recharge the battery, toy car 2 could also be provided with an electric power generator run by the engine of toy car 2.

According to an embodiment not shown, toy car 2 is provided with rear view mirrors, placed so that they are framed by camera 8, and whose function is to allow a back view from toy car 2 by means of camera 8. As an alternative, toy car 2 could be provided with a further camera placed so that it takes a back view of toy car 2 itself. Furthermore, toy car 2 could be provided with lights (not shown) for driving with poor visibility.

Many experimental tests showed that toy car 2 tends to be "nervous", namely that it reacts very suddenly to steering orders. This is the reason why toy car 2 can be provided with a gyroscopic system having a settled counterweight. When toy car 2 turns to one side, the gyroscopic system generates a torque that tends to oppose toy car's turning; in this way the driving of toy car 2 is "softer" (less "nervous") and more similar to the driving of a real vehicle. Obviously, the counterweight of the gyroscopic system must be calculated according to the desired driving specifications.

The fixed driving post 6 is shaped like a real driving post and includes a seat 11 for the user and a series of driving controls 12 reproducing those of a real car. In particular, the controls comprise a steering wheel 13, an accelerator pedal 14 and a brake pedal 15. It is evident that by means of a radio transmission device 7 the accelerator pedal 14 acts on the engine of toy car 2, the steering wheel 13 acts on the actuator of the steering device of toy car 2 and the brake pedal 15 acts on the braking device of toy car 2. Obviously, if the engine of toy car 2 is connected with a change gear moved by a respective actuator, the controls 12 of the driving post 6 will also comprise some controls for the change gear and preferably a couple of levers respectively engaging the higher and the lower gear. Display 9 is a large display (having a diagonal not shorter than 20 inches, and preferably not shorter than 25 inches) and is coupled to the driving post 6 so that it is located in front of the user sitting on the seat 11.

The driving system 1 further comprises at least a microphone 15 installed on toy car 2 and connected with the radio transmission device 10 in order to transmit the received sounds (usually noises generated by the engine, noises deriving from the contact of wheels 3, 4 with the ground and aerodynamic noises) to the driving post 6, which is provided with an amplification device 16 with loudspeakers.

According to an embodiment not shown, the driving post 6 includes panels placed behind and on the sides of the display 9 in order to limit the user's view while he is sitting on the seat 11, and therefore to prevent distractions during the driving.

With regard to the aforesaid, it is evident that the driving post 6 is a drive simulator which allows a user to drive toy car 2 with the same driving procedures of a real car.

The driving system 1 includes three acceleration sensors 17 which are placed inside toy car 2, are apt to detect respective signals depending on the acceleration of toy car 2 along three perpendicular axes, and are able to transmit those detected signals to the driving post 6 by means of the radio transmission device 10. According to the embodiment shown in the enclosed figures, the driving post 6 includes an actuator device 18 connected with the radio transmission device 10. This actuator 18 is mechanically coupled to the steering wheel 12 and can impart to the steering wheel 12 an instantaneous force to reproduce, at least partially, on the steering wheel 12 the instantaneous accelerations of toy car 2 and/or the vibrations of toy car 2, and to transmit to the seat 11 the instantaneous accelerations of toy car 2. In particular, the actuator device 18 produces oscillations of the steering wheel 12 on its own axis with a variable force; as an alternative, the steering wheel 12 is set on the driving post 6 so that it moves under the action of the actuator device 18 along three perpendicular directions.

According to a different embodiment not shown, the actuator device 18 acts on seat 11, or on a frame 19 supporting the driving post 6. According to a preferred embodiment, the actuator device 18 acts both on the seat 11, moving it along three perpendicular directions, and on the steering wheel 12 making it swing around its axis, so that it transmits to the wheel 12 the vibrations of toy car 2 and transfers to the seat 11 the instantaneous accelerations of toy car 2.

As an example and according to the intensity of the movements to be produced, the actuator device 18 can include pneumatic or oleodynamic pistons, linear electric engines, rotating electric engines connected to eccentric masses, electromagnetic or piezoelectric actuators.

According to a possible embodiment, in the driving post 6 it is foreseen a device 20 for video signal processing, which is connected with the radio transmission device 10 and with the display 9, and which can process video signals from the camera 8 in order to stabilize the image on the display 9 thus offsetting the effects of the accelerations of toy car 2 on the camera 8. Preferably, the video signal processing device 20 uses signals detected by the acceleration sensors 17 in order to determine the accelerations impressed by the toy car 2 on the camera 8.

The driving post 6 includes a series of instruments 21, each of them measuring a functional value of toy car 2. In particular, the instruments 21 can show the speed of toy car 2, the number of revolutions of the engine of toy car 2 and the amount of fuel contained in a tank of toy car 2. For this reason the toy car 2 is provided with three sensors which are able to detect the functional values of toy car 2 displayed by the instruments 21. The sensors are connected to the radio transmission device 10 to transmit the functional values detected by the instruments 21. According to a different embodiment not shown, instead of using the sensors 22, the driving post 6 is provided with calculation means in order to evaluate the functional values of toy car 2 displayed by the instruments 21. For example, the speed of toy car 2 can be evaluated by means of the integration in time of the acceleration of the toy car 2 along an advancement direction of said toy car, wherein said acceleration is detected by one of the acceleration sensors 17. As an alternative, the speed and the number of revolutions of the engine of toy car 2 can be found by analysing the sound generated by the engine of toy car 2; the noise of the engine can be detected by means of microphone 15, or by means of another microphone (not shown) coupled to said engine.

Preferably, toy car 2 presents a reduction ratio of 1:5 or the like, so that its dimensions allow the housing of all the aforesaid devices.

Figure 3 illustrates a driving system 23 comprising a plurality of the aforesaid toy cars 2, and a racing track 24 for toy cars 2. Close to racing track 24 the driving posts 6 of toy cars 2 are placed so that they usually do not allow a view on the racing track 24 to users sitting on their respective seats 11. In some situations (for example, when toy car 2 goes off the road) it is useful for a user to have a general view of the racing track 24. This is the reason why the racing track 24 is provided with at least one camera 25, which takes a general air shot of the racing track 24 and is connected to each driving post 6 in order to allow, in particular cases, the display of images taken by the camera 25 on the display 9.

Practical tests pointed out that, since the driving simulator of toy car 2 is very similar to reality, a user wishing to drive his own toy car 2 using the relative driving post 6 needs the racing track 24 to be provided with braking signals placed near the bends (namely visible signals giving the user an indication of the distance to the next bend), and to be provided with coloured kerbs 27 near the bends to limit the edges of said racing track 24.

It must be noticed that, while driving a toy car 2, a user must not get distracted looking directly at his toy car 2, but he must concentrate only on the image showed by the display 9 of the driving post 6. In case of a race among several users, each of them driving his toy car 2, each of them will receive information (both by showing notices on the display 9, and by means of vocal messages) regarding the race. For example, information could concern current classification, distances between toy cars, lap time, missing laps. In order to detect the position of toy cars 2 and the mileage time of racing track 24 for each toy car 2, said racing track 24 can be provided with a series of emitters and each toy car 2 can be provided with a corresponding sensor to detect the passage of toy car 2 near an emitter; or, vice versa, each toy car 2 can be provided with an emitter and the racing track 24 can be provided with a series of sensors detecting the passage of the emitter installed on a toy car 2.

The aforesaid driving system 1 makes a user feel the pleasure of driving a real vehicle (represented by a model on a reduced scale of a real car) with driving feelings quite similar to those of a real racing car. It must be noticed that the use of a toy car 2 is absolutely safe, that driving a toy car 2 is much more realistic than playing with video games and that only a brief training is necessary to learn how to drive a toy car 2, because it is like driving a real car. Considering the aforesaid, the driving system 1 can be suitably used for driving training courses and for road safety courses in safety, especially for people who are too young for a driving license. Obviously, in this case the racing track 24 must be transformed into an urban or extra-urban path provided with the corresponding road signs.

## Claims

1. Driving system (1) for remote-controlled scale models of road vehicles (2) comprising a driving device (5) integrated in a model (2) of vehicle to give driving orders to the model (2) of vehicle, a user interface (12, 13, 14) apt to receive driving orders from a user, a first radio transmission device (7) for transmitting the orders from the user interface (12, 13, 14) to the driving device (5), at least one camera (8) placed on the model (2) of vehicle for shooting an image corresponding to the driver's view, a display (9) coupled to the user interface (12, 13, 14) in order to display the images shot by the camera (8), and a second radio transmission device (10) for transmitting the images from the camera (8) to the display (9), said driving system being **characterized in that** it -comprises a fixed driving post (6) shaped like that of a real car, including a seat (11) for the user and a series of driving devices (12, 13, 14) reproducing the controls of a real car and constituting the user's interface (12, 13, 14), said display (9) being coupled to the driving post (6) in order to be in front of the user sitting on the seat (11), and being able to show a large image.

2. Driving system (1) according to claim 1, comprising at least an acceleration sensor (17) installed inside the model (2) of vehicle apt to detect a signal depending on the acceleration of the model (2) of vehicle along at least one axis, and apt to transmit the detected signal to the driving post (6) through the second radio transmission device (10).

3. Driving system (1) according to claim 2, wherein the driving post (6) comprises a device (20) for processing video signals, connected to the second radio transmission device (10) and to the display (9) in order to process the video signal coming from the camera (8) for stabilizing the image offsetting the effects of the accelerations of the model (2) of vehicle on the camera (8), said processing device (20) using the signal coming from the acceleration sensor (17).

4. Driving system (1) according to claim 2, wherein the driving post (6) comprises an actuator device (18), connected to the second radio transmitting device (10) which is mechanically coupled to the seat (11) and is apt to give the seat (11) an instantaneous force in order to reproduce at least partially on the seat (11) the instantaneous accelerations of the model (2) of vehicle.

5. Driving system (1) according to claim 2, wherein the driving post (6) comprises an actuator device (18) connected to the second radio transmitting device (10) and mechanically assembled to at least a driving device (12, 13, 14) and apt to impart an instantaneous force in order to reproduce, at least partially, on the driving devices (12, 13, 14) the instantaneous accelerations of the model (2) of vehicle.

6. Driving system (1) according to claims 1 to 5, wherein the driving post (6) includes at least an instrument (21) in order to measure a functional value of the model (2) of vehicle.

7. Driving system (1) according to claim 6, wherein the driving post (6) includes calculation means apt to evaluate the functional value of the model (2) of vehicle measured by the instrument (21).

8. Driving system (1) according to claim 6, including a further sensor (22) placed inside the model (2) of vehicle, apt to detect the functional value of the model (2) of vehicle measured by the instrument (21) and apt to transmit the functional value of the model (2) of vehicle to the instrument (21) by means of the second radio transmitting device (10).

9. Driving system (1) according to one of claims 1-8, comprising at least a microphone (15) installed on the model (2) of vehicle and connected to the second radio transmitting device (10), the driving post (6) including an amplification device (16) with loudspeakers connected to the second radio transmitting device (10) in order to reproduce the sounds received by microphone (15).

10. Driving system (1) according to one of the claims 1-9, wherein driving post (6) includes a panel placed behind and on the sides of the display (9) in order to limit the view of the user sitting on the seat (11).

11. Driving system (1) according to one of the claims 1- 10, including a gyroscopic system coupled to the model (2) of vehicle.

12. Driving system (23) comprising a plurality of models (2) of vehicle, each of them being a vehicle on wheels (3, 4) provided with a driving system (1) according to claims 1-16, and a racing track (24) for the circulation of the models (2) of vehicle, each driving post (6) being disposed so that a user sitting on the driver's seat (11) can not see the racing track (24).

13. Driving system (23) according to claim 12, wherein the racing track (24) is at least partially provided with braking signals (26) placed near the bends and with coloured kerbs (27) to limit the edges of said racing track (24).

14. Driving system (23) according to claims 13 or 14, wherein along the racing track (24) sensors apt to detect the passage of a model (2) of vehicle are foreseen in order to calculate the time of a partial or total lap.
